# EUROPEAN PATENT APPLICATION

(11) **EP 4 836 108 A1**
(43) Date of publication of application: **04.11.2026**
(21) Application number: 24909505.0
(22) Date of filing: 20.05.2024
(51) Int. Cl.: H01M 50/15, H01M 50/317, H01M 50/103

(54) **COVER PLATE ASSEMBLY AND SINGLE-CELL BATTERY**

(30) Priority: 29.12.2023 CN 202311862977
(71) Applicant: SVOLT Energy Technology Co., Ltd., Changzhou, Jiangsu 213200 (CN)
(72) Inventor: XIN, Xueqian, hangzhou, Jiangsu 213200 (CN); LI, Jincheng, hangzhou, Jiangsu 213200 (CN); YAN, Huailei, hangzhou, Jiangsu 213200 (CN); SHEN, Liangjun, hangzhou, Jiangsu 213200 (CN); LIU, Youjian, hangzhou, Jiangsu 213200 (CN)
(74) Representative: Michalski Hüttermann & Partner mbB
(86) International application number: PCT/CN2024/093380
(87) International publication number: WO 2025/138538

(57) **Abstract**

The present disclosure discloses a cover plate assembly and a cell, belonging to the technical field of batteries. The cover plate assembly has a first direction and includes: a cover plate, wherein the cover plate is provided with an explosion-proof hole in the first direction; an insulating member, wherein the insulating member is connected to the cover plate in the first direction and provided with an accommodating groove facing the cover plate; a support member, wherein the support member is arranged in the accommodating groove, and a melting point of the support member is greater than a melting point of the insulating member; and limiting members, wherein the limiting members are arranged in the accommodating groove and connected to the insulating member, and the limiting members abut against the support member in a direction perpendicular to the first direction, so that the support member is fixed to the accommodating groove.

## Description

### CROSS-REFERENCE TO THE RELATED APPLICATIONS

The present disclosure claims priority to Chinese patent application No. 202311862977. X, filed with the China National Intellectual Property Administration on December 29, 2023, and entitled "COVER PLATE ASSEMBLY AND CELL", the entire contents of which are incorporated herein by reference.

### TECHNICAL FIELD

The present disclosure relates to, but is not limited to, the technical field of batteries, and in particular relates to a cover plate assembly and a cell.

### BACKGROUND

In addition to an electrode assembly, various insulating and fixing structures are also required to be arranged inside a housing of a battery to stably fix the electrode assembly, and the housing also needs to be sealed by a top cover. An explosion-proof structure needs to be arranged on the top cover to relieve pressure in a timely manner when thermal runaway occurs in the battery. However, when thermal runaway occurs in the battery, the various insulating and fixing structures in the housing are easily melted and disappear due to heat. At this time, the electrode assembly easily moves to the top cover under the action of high-temperature and high-pressure gas and blocks the explosion-proof structure, thereby causing the battery to catch fire or even explode.

### SUMMARY

In a first aspect, an embodiment of the present disclosure provides a cover plate assembly, the cover plate assembly has a first direction, and the cover plate assembly includes:
a cover plate, wherein the cover plate is provided with an explosion-proof hole in the first direction;
an insulating member, wherein the insulating member is connected to the cover plate in the first direction, and the insulating member is provided with an accommodating groove facing the cover plate;
a support member, wherein the support member is arranged in the accommodating groove, and a melting point of the support member is greater than a melting point of the insulating member; and
limiting members, wherein the limiting members are arranged in the accommodating groove and connected to the insulating member, and the limiting members abut against the support member in a direction perpendicular to the first direction, so that the support member is fixed to the accommodating groove.

In some embodiments, the accommodating groove has a peripheral wall surrounding the support member and a bottom wall connected to the support member, and the peripheral wall is connected to the bottom wall; and
the plurality of limiting members are provided, and the plurality of limiting members are connected to the peripheral wall.

In some embodiments, the plurality of limiting members are arranged around the peripheral wall;
and/or, the plurality of limiting members are arranged at intervals along the first direction.

In some embodiments, the limiting member has a first end and a second end opposite to each other in the first direction, the second end faces the bottom wall, and a first chamfer is arranged on one side of the first end facing away from the peripheral wall.

In some embodiments, the support member has a third end and a fourth end in the first direction, the fourth end faces the bottom wall, and a second chamfer is circumferentially arranged on an edge of the fourth end.

In some embodiments, an orthographic projection of the support member on the cover plate is at least partially located outside the explosion-proof hole.

In some embodiments, the insulating member is provided with a vent hole in the first direction, and the vent hole is in communication with the explosion-proof hole.

In some embodiments, a fitting clearance between the support member and the peripheral wall is a mm, satisfying: 0.2 mm ≥ a ≥ 0.1 mm;
and/or, a dimension of the limiting member in a direction perpendicular to the peripheral wall is b mm, satisfying: 0.5 mm ≥ b ≥ 0.2 mm.

In some embodiments, a dimension of the support member in the first direction is less than or equal to a depth of the accommodating groove in the first direction.

In a second aspect, an embodiment of the present disclosure provides a cell, including the cover plate assembly described above, and further including a housing and an electrode assembly, the housing has an accommodating cavity and an opening in communication with the accommodating cavity, the electrode assembly and the insulating member are arranged in the accommodating cavity, the cover plate covers the opening, and the insulating member is located between the cover plate and the electrode assembly.

### BRIEF DESCRIPTION OF THE DRAWINGS

To describe the technical solutions in the embodiments of the present disclosure more clearly, the drawings required for describing the embodiments will be briefly introduced below. Obviously, the drawings described below are merely some embodiments of the present disclosure, and for those skilled in the art, other drawings can also be obtained based on these drawings without inventive efforts.
FIG. 1 is a schematic exploded structural diagram of a cover plate assembly, a housing, and an electrode assembly according to Embodiment 1 of the present disclosure;
FIG. 2 is a schematic structural diagram of an insulating member and a support member according to Embodiment 1 of the present disclosure;
FIG. 3 is a schematic exploded structural diagram of an insulating member and a support member according to Embodiment 1 of the present disclosure;
FIG. 4 is a schematic structural diagram of an opening of an accommodating groove of an insulating member in a front view according to Embodiment 1 of the present disclosure;
FIG. 5 is a schematic sectional structural diagram taken along line A-A in FIG. 4;
FIG. 6 is an enlarged structural diagram of part B in FIG. 5;
FIG. 7 is a schematic structural diagram of one side of an insulating member facing away from an opening of an accommodating groove according to Embodiment 1 of the present disclosure;
FIG. 8 is a schematic exploded structural diagram of an insulating member and a support member according to Embodiment 2 of the present disclosure;
FIG. 9 is a schematic structural diagram of an opening of an accommodating groove of an insulating member in a front view according to Embodiment 2 of the present disclosure;
FIG. 10 is a schematic sectional structural diagram taken along line C-C in FIG. 9; and
FIG. 11 is an enlarged structural diagram of part D in FIG. 10.

Reference numerals: 1, cover plate assembly; 10, cover plate; 100, explosion-proof hole; 101, explosion-proof valve; 102, electrode post; 11, insulating member; 110, accommodating groove; 1100, peripheral wall; 1101, bottom wall; 111, structural groove; 112, vent hole; 113, through hole; 12, support member; 120, third end; 121, fourth end; 122, second chamfer; 13, limiting member; 130, first end; 131, second end; 132, first chamfer; 2, housing; 20, accommodating cavity; 21, opening; 22, side plate; 3, electrode assembly; 30, tab; 4, bottom cover member; X, first direction; Y, second direction; and Z, third direction.

### DETAILED DESCRIPTION OF THE EMBODIMENTS

The technical solutions in the embodiments of the present disclosure will be clearly and completely described below with reference to the drawings in the embodiments of the present disclosure. Obviously, the described embodiments are merely a part of the embodiments of the present disclosure, rather than all of the embodiments. Based on the embodiments of the present disclosure, all other embodiments obtained by those skilled in the art without inventive efforts shall fall within the protection scope of the present disclosure.

In the description of the present disclosure, it should be understood that the orientations or positional relationships indicated by the terms "thickness", "upper", "lower", "top", "bottom", "inner", "outer" and the like are the orientations or positional relationships based on those shown in the drawings, and are merely for the convenience of describing the present disclosure and simplifying the description, rather than indicating or implying that the referred device or component must have a specific orientation or be constructed and operated in a specific orientation, and therefore cannot be construed as limiting the present disclosure.

In addition, the terms "first" and "second" are used merely for descriptive purposes, and cannot be construed as indicating or implying relative importance or implicitly indicating the number of the indicated technical features. Thus, the features defined with "first" and "second" can explicitly or implicitly include one or more features. In the description of the present disclosure, "a plurality of" means two or more than two, and "at least one" can refer to one, two, or more than two, unless otherwise explicitly and specifically defined.

The applicant has noticed that in addition to an electrode assembly, various insulating and fixing structures are also required to be arranged inside a housing of a battery to stably fix the electrode assembly. Most of the insulating and fixing structures are made of plastic materials, such as polypropylene material, with a melting point of approximately 160 °C. When thermal runaway occurs in the battery, the internal temperature of the battery can reach above 400 °C, and the various insulating and fixing structures in the housing are easily melted and disappear due to heat. At this time, the electrode assembly easily moves to a pressure relief structure of the battery under the action of high-temperature and high-pressure gas, and blocks the pressure relief structure, thereby causing the battery to catch fire or even explode.

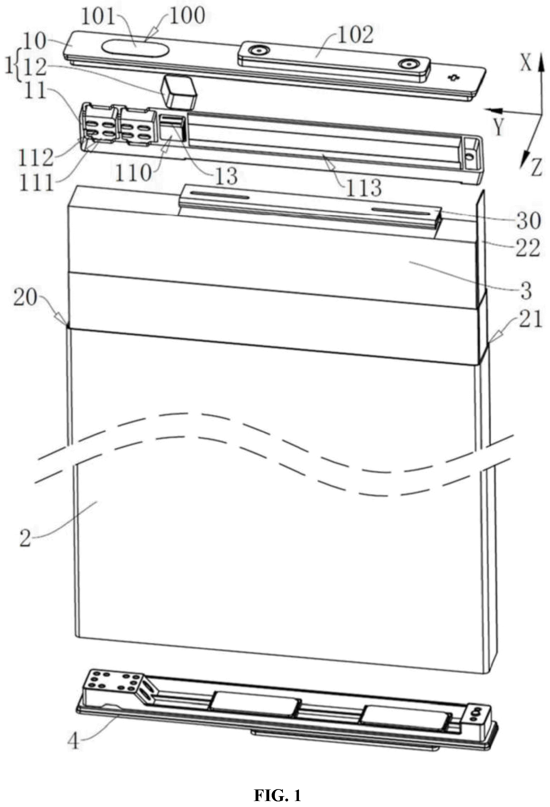

In view of this, in conjunction with FIG. 1 to FIG. 11, an embodiment of the present disclosure provides a cover plate assembly to solve at least one of the above technical problems.

In the following embodiments, a first direction X, a second direction Y, and a third direction Z are introduced, which are perpendicular to each other. The first direction X is parallel to a thickness direction of the cover plate assembly 1, the second direction Y is parallel to a length direction of the cover plate assembly 1, and the third direction Z is parallel to a width direction of the cover plate assembly 1.

### Embodiment 1

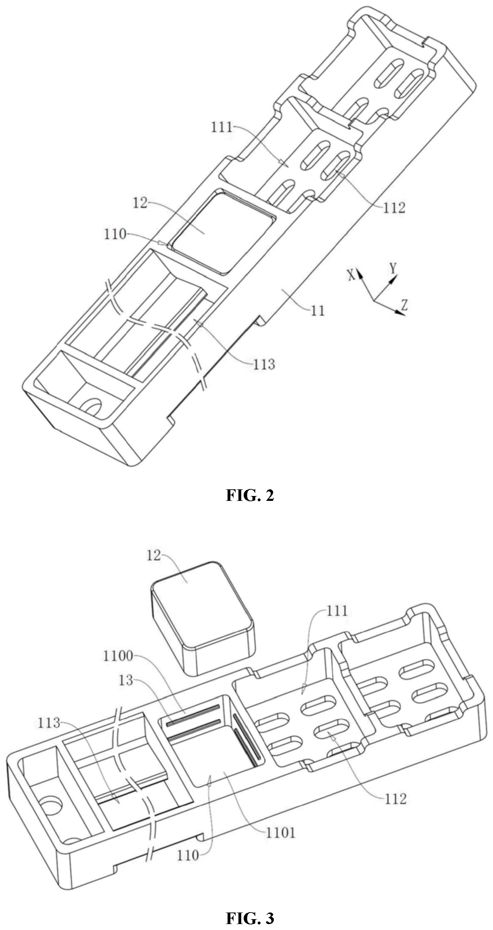

Referring to FIG. 1 and FIG. 2, the cover plate assembly 1 includes a cover plate 10 and an insulating member 11 connected to the cover plate 10 in the first direction X.

The cover plate 10 is provided with an explosion-proof hole 100 in the first direction X, the insulating member 11 is provided with an accommodating groove 110 facing the cover plate 10, a support member 12 is arranged in the accommodating groove 110, and a melting point of the support member 12 is greater than a melting point of the insulating member 11. Meanwhile, limiting members 13 are further arranged in the accommodating groove 110, the limiting members 13 are connected to the insulating member 11, and the limiting members 13 abut against the support member 12 in a direction perpendicular to the first direction X, so that the support member 12 is fixed to the accommodating groove 110.

The accommodating groove 110 cooperates with the limiting member 13 to form abutting positioning for the support member 12, so that the installation convenience of the support member 12 is improved, and at the same time, the accommodating groove 110 reduces the increase in overall thickness dimension of the cover plate assembly 1 caused by the support member 12. When the thermal runaway occurs in the battery, the insulating member 11 is melted under a high-temperature state and gradually loses a supporting effect on the electrode assembly 3 inside the battery. The support member 12 is more resistant to high temperature than the insulating member 11, and can effectively remain supported between the cover plate 10 and the electrode assembly 3, so as to prevent the electrode assembly 3 from moving toward the cover plate 10 and blocking the explosion-proof hole 100, which facilitates smooth discharge of high-temperature gas generated by the thermal runaway of the battery through the explosion-proof hole 100, and improves the safety of the battery.

It should be noted that the insulating member 11 can be made of plastic materials such as polypropylene or other polymers, and the insulating member 11 begins to melt at around 160 °C. In this embodiment, the support member 12 is designed as a block-shaped structure, the support member 12 can be embedded in the accommodating groove 110, and the support member 12 can be made of a material with a melting point higher than 400 °C, such as a ceramic material. A melting point of the support member 12 made of the ceramic material can be greater than 2000 °C, so that the support member 12 can be effectively supported between the electrode assembly 3 and the cover plate 10 under the high temperature of thermal runaway of the battery.

In some embodiments, referring to FIG. 2 and FIG. 3, the accommodating groove 110 has a peripheral wall 1100 surrounding the support member 12 and a bottom wall 1101 connected to the support member 12, the peripheral wall 1100 is connected to the bottom wall 1101, the plurality of limiting members 13 are provided, and the plurality of limiting members 13 are connected to the peripheral wall 1100. It should be noted that in this embodiment, the limiting members 13 are of elongated strip structures extending perpendicular to the first direction X. In a process of placing the support member 12 into the accommodating groove 110, the support member 12 is in an interference fit with the plurality of limiting members 13, that is, the support member 12 is stably embedded into the accommodating groove 110 to achieve fixing by overcoming interference resistance of the plurality of limiting members 13 perpendicular to the first direction X.

Further, in some embodiments, referring to FIG. 3, the plurality of limiting members 13 are arranged around the peripheral wall 1100. In this embodiment, the peripheral wall 1100 has four surfaces connected to each other. In order to optimize an arrangement structure of the plurality of limiting members 13 and an abutting effect on the support member 12, the plurality of limiting members 13 can be evenly distributed on the four surfaces of the peripheral wall 1100.

In addition, in order to expand an action range of the limiting members 13 abutting against the support member 12, the plurality of limiting members 13 are arranged at intervals along the first direction X, that is, a plurality of limiting members 13 are arranged along the first direction X on each of the four surfaces of the peripheral wall 1100, so as to ensure that each side surface of the support member 12 facing the peripheral wall 1100 is provided with a plurality of abutting action ends, thereby improving the positioning effect on the support member 12. Specifically, in this embodiment, two limiting members 13 are arranged on each surface of the peripheral wall 1100. In other embodiments, the number of the limiting members 13 can be flexibly increased or decreased according to dimensions of the insulating member 11 and the support member 12.

In addition, in some embodiments, referring to FIG. 2 to FIG. 6, the limiting member 13 has a first end 130 and a second end 131 opposite to each other in the first direction X, the second end 131 faces the bottom wall 1101, and a first chamfer 132 is arranged on one side of the first end 130 facing away from the peripheral wall 1100. In a process of guiding the support member 12 into the accommodating groove 110, the first chamfer 132 is beneficial for reducing obstruction of the limiting member 13 to the support member 12.

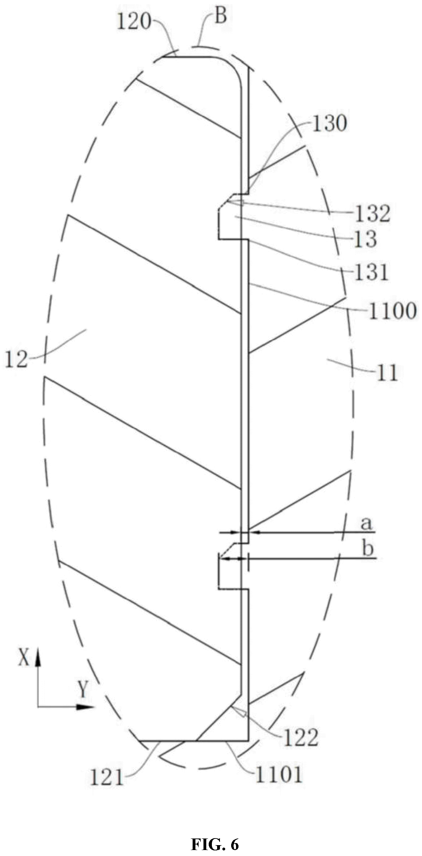

Further, referring to FIG. 6, the support member 12 has a third end 120 and a fourth end 121 in the first direction X, the fourth end 121 faces the bottom wall 1101, and a second chamfer 122 is circumferentially arranged on an edge of the fourth end 121. The second chamfer 122 is configured to cooperate with the first chamfer 132 to guide the entire support member 12 into the accommodating groove 110, so as to further reduce the obstruction of the limiting member 13 to the support member 12 and reduce the difficulty of installing the support member 12.

In some embodiments, referring to FIG. 1 to FIG. 3, the insulating member 11 and the plurality of limiting members 13 can be manufactured by integral molding. In the molding manufacturing process, the insulating member 11 can form an accommodating groove 110 and structural grooves 111. The structural grooves 111 can reduce material usage of the entire insulating member 11 and reduce an overall weight of the insulating member 11; and the number of the structural grooves 111 can be flexibly adjusted according to actual dimensions of the insulating member 11 and structural requirements. In this embodiment, two structural grooves 111 are taken as an example. The two structural grooves 111 and the accommodating groove 110 are arranged at intervals in sequence in the second direction Y, the structural grooves 111 face the explosion-proof hole 100 in the first direction X, the insulating member 11 is provided with vent holes 112 in the first direction X, and the vent holes 112 are located in the structural grooves 111 and are in communication with the explosion-proof hole 100.

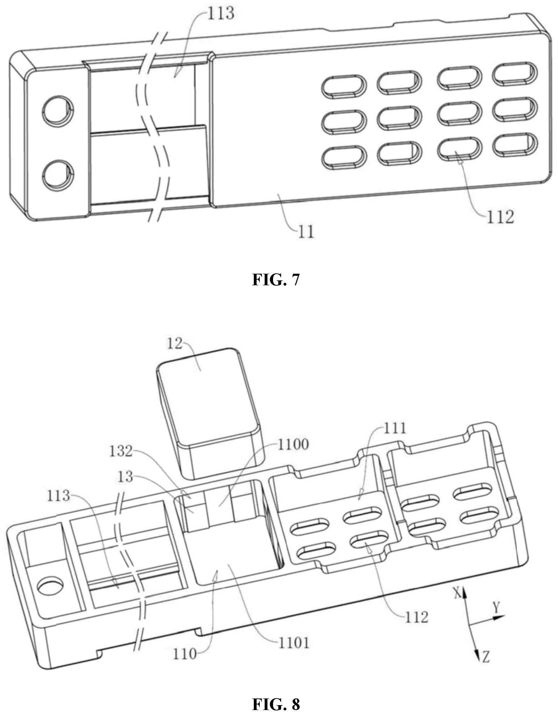

Referring to FIG. 1 and FIG. 7, in this embodiment, each structural groove 111 is provided with a plurality of vent holes 112, and the plurality of vent holes 112 are evenly distributed in the structural groove 111. When the thermal runaway occurs in the battery, high-temperature and high-pressure gas generated inside the battery can be discharged from the vent holes 112 toward the explosion-proof hole 100. The plurality of vent holes 112 can ensure that, while maintaining a sufficient contact area between the insulating member 11 and the electrode assembly 3, a sufficient venting efficiency can be provided by the vent holes 112.

In some embodiments, referring to FIG. 1 to FIG. 3, an orthographic projection of the support member 12 on the cover plate 10 is at least partially located outside the explosion-proof hole 100. In this embodiment, taking the accommodating groove 110 and the explosion-proof hole 100 being offset from each other as an example, the corresponding support member 12 is not opposite to the explosion-proof hole 100 in the first direction X, thereby preventing the support member 12 from obstructing the venting passage of the explosion-proof hole 100, and at the same time, avoiding the installation structure of the support member 12 from affecting the installation of structures such as the explosion-proof valve 101 at the explosion-proof hole 100.

In addition, in other embodiments, when an opening area of the explosion-proof hole 100 is designed to be relatively large, the accommodating groove 110 can also be partially opposite to the explosion-proof hole 100. At this time, although a part of the support member 12 is opposite to the explosion-proof hole 100 in the first direction X, smooth pressure relief of the explosion-proof hole 100 can still be ensured.

In some embodiments, referring to FIG. 6, a fitting clearance between the support member 12 and the peripheral wall 1100 is a mm, satisfying: 0.2 mm ≥ a ≥ 0.1 mm, and a can be any one of 0.1 mm, 0.11 mm, 0.12 mm, 0.13 mm, 0.14 mm, 0.15 mm, 0.16 mm, 0.17 mm, 0.18 mm, 0.19 mm, and 0.2 mm, or a range value composed of any two thereof.

Correspondingly, a dimension of the limiting member 13 in a direction perpendicular to the peripheral wall 1100 is b mm, satisfying: 0.5 mm ≥ b ≥ 0.2 mm, and b can be any one of 0.2 mm, 0.21 mm, 0.22 mm, 0.23 mm, 0.24 mm, 0.25 mm, 0.26 mm, 0.27 mm, 0.28 mm, 0.29 mm, 0.3 mm, 0.31 mm, 0.32 mm, 0.33 mm, 0.34 mm, 0.35 mm, 0.36 mm, 0.37 mm, 0.38 mm, 0.39 mm, 0.4 mm, 0.41 mm, 0.42 mm, 0.43 mm, 0.44 mm, 0.45 mm, 0.46 mm, 0.47 mm, 0.48 mm, 0.49 mm, and 0.5 mm, or a range value composed of any two thereof.

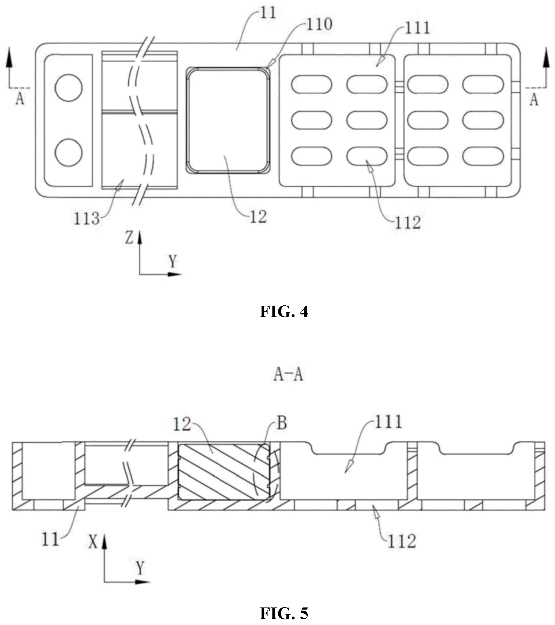

In some embodiments, referring to FIG. 5, a dimension of the support member 12 in the first direction X is less than or equal to a depth of the accommodating groove 110 in the first direction X. In this embodiment, taking the dimension of the support member 12 in the first direction X being smaller than the depth of the accommodating groove 110 in the first direction X as an example, the additional provision of the support member 12 does not increase a dimension of the entire cover plate assembly 1 in the first direction X, which is beneficial for avoiding an impact on the overall dimension of the battery.

In addition, in some embodiments, referring to FIG. 2 and FIG. 3, the insulating member 11 is provided with a through hole 113 in the first direction X, and the through hole 113 is configured to allow a tab 30 to pass through. In an actual assembly process, the through hole 113 is configured to allow the tab 30 of the electrode assembly 3 to pass through, so as to be electrically connected to an electrode post 102 on the cover plate 10. In this embodiment, the through hole 113 is located on one side of the accommodating groove 110 facing away from the structural groove 111 in the second direction Y.

The embodiment of the present disclosure has the following beneficial effects. The cover plate assembly 1 of the embodiment of the present disclosure includes a cover plate 10, an insulating member 11, a support member 12, and a limiting member 13, wherein the cover plate 10 is provided with an explosion-proof hole 100 in the first direction X, the insulating member 11 is connected to the cover plate 10 in the first direction X, the insulating member 11 is provided with an accommodating groove 110 facing the cover plate 10, the support member 12 is arranged in the accommodating groove 110, a melting point of the support member 12 is greater than a melting point of the insulating member 11, the limiting members 13 are arranged in the accommodating groove 110 and connected to the insulating member 11, and the limiting members 13 abut against the support member 12 in a direction perpendicular to the first direction X, so that the support member 12 is fixed to the accommodating groove 110. The accommodating groove 110 cooperates with the limiting member 13 to form abutting positioning for the support member 12, so that the installation convenience of the support member 12 is improved, and at the same time, the accommodating groove 110 reduces the increase in overall thickness dimension of the cover plate assembly 1 caused by the support member 12. When the thermal runaway occurs in the battery, the insulating member 11 is melted under a high-temperature state and gradually loses a supporting effect on the electrode assembly 3 inside the battery. The support member 12 is more resistant to high temperature than the insulating member 11, and can effectively remain supported between the cover plate 10 and the electrode assembly 3, so as to prevent the electrode assembly 3 from moving toward the cover plate 10 and blocking the explosion-proof hole 100, which facilitates smooth discharge of high-temperature gas generated by the thermal runaway of the battery through the explosion-proof hole 100, and improves the safety of the battery.

Correspondingly, this embodiment further provides a cell.

Referring to FIG. 1, the cell includes the cover plate assembly 1 described above, and further includes a housing 2 and an electrode assembly 3; the housing 2 has an accommodating cavity 20, and an opening 21 in communication with the accommodating cavity 20 is arranged at one end of the housing 2 in the first direction X; the electrode assembly 3 has a tab 30 at one end in the first direction X; the electrode assembly 3 and the insulating member 11 are arranged in the accommodating cavity 20, and the tab 30 faces the cover plate 10; an electrode post 102 is arranged on the cover plate 10 opposite to the tab 30; when the cover plate 10 covers the opening 21, the tab 30 can pass through the through hole 113 and be electrically connected to the electrode post 102; the insulating member 11 is located between the cover plate 10 and the electrode assembly 3, and meanwhile the support member 12 is arranged between the cover plate 10 and the electrode assembly 3 to form a preset support structure.

In addition, as shown in FIG. 1, a side plate 22 is further arranged in the housing 2 on one side of the electrode assembly 3 in the second direction Y, and the side plate 22 and the insulating member 11 are both fixedly connected to the housing 2 as fixing structures of the electrode assembly 3.

In addition, in this embodiment, referring to FIG. 1, a bottom cover member 4 is further arranged at the other end of the housing 2 in the first direction X; a structure of the bottom cover member 4 is similar to that of the cover plate 10; in this embodiment, the bottom cover member 4 is only used for sealing the housing 2 and leading out an electrode; in other embodiments, if the bottom cover member 4 is also provided with a pressure relief structure, a support member 12 can also be additionally arranged between the bottom cover member 4 and the electrode assembly 3, so as to ensure that the pressure relief structure at the bottom cover member 4 is not blocked by the electrode assembly 3 when thermal runaway occurs in the battery.

### Embodiment 2

Referring to FIG. 8 to FIG. 11, a difference between this embodiment and Embodiment 1 lies in that in this embodiment, the limiting members 13 are of elongated strip structures extending along the first direction X, and a dimension of each limiting member 13 in a direction perpendicular to the first direction X is larger than a dimension of the limiting member 13 in the first direction X in Embodiment 1.

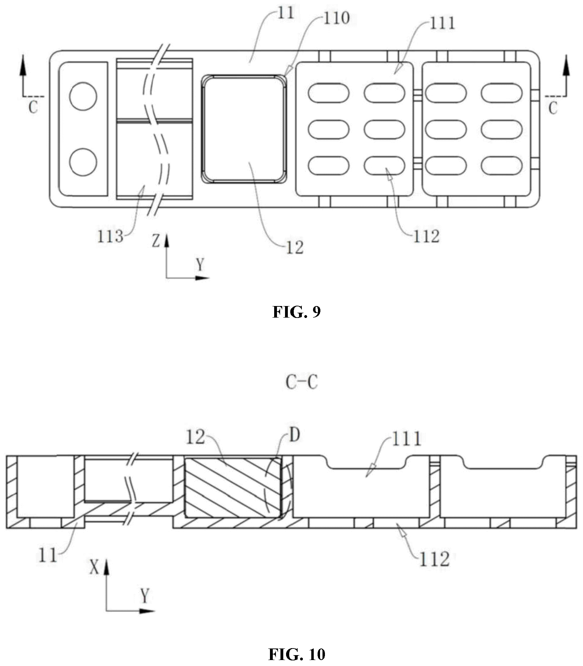

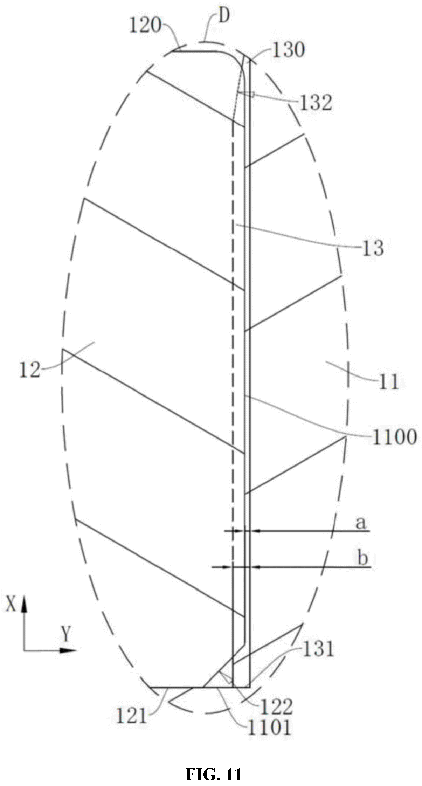

Similarly, in order to expand an action range of the limiting members 13 abutting against the support member 12, in this embodiment, the plurality of limiting members 13 can be evenly distributed on the four surfaces of the peripheral wall 1100; in this embodiment, two limiting members 13 are arranged on each surface of the peripheral wall 1100, and the two limiting members 13 are distributed at intervals in a direction perpendicular to the first direction X. As shown in FIG. 10 and FIG. 11, the first end 130 of the limiting member 13 extends to the end of the opening 21 of the accommodating groove 110, and the second end 131 extends to the bottom wall 1101. It is ensured that a plurality of abutting action ends are provided for each side surface of the support member 12 facing the peripheral wall 1100, thereby improving an effect of positioning the support member 12. In addition, in other embodiments, the number of the limiting members 13 can be flexibly increased or decreased according to the dimensions of the insulating member 11 and the support member 12.

The above provides a detailed introduction to the cover plate assembly and the cell provided by the embodiments of the present disclosure, and specific examples are applied to illustrate the principle and implementation of the present disclosure; the description of the above embodiments is merely used to facilitate understanding.

The technical solutions and core concepts of the present disclosure should be understood by those of ordinary skill in the art as follows: they may still make modifications to the technical solutions described in the foregoing embodiments, or make equivalent substitutions for some of the technical features thereof. However, such modifications or substitutions do not cause the essence of the corresponding technical solutions to depart from the scope of the technical solutions of the embodiments of the present disclosure.

## Claims

1. A cover plate assembly, wherein the cover plate assembly has a first direction, and the cover plate assembly comprises:
a cover plate, wherein the cover plate is provided with an explosion-proof hole in the first direction;
an insulating member, wherein the insulating member is connected to the cover plate in the first direction, and the insulating member is provided with an accommodating groove facing the cover plate;
a support member, wherein the support member is arranged in the accommodating groove, and a melting point of the support member is greater than a melting point of the insulating member; and
limiting members, wherein the limiting members are arranged in the accommodating groove and connected to the insulating member, and the limiting members abut against the support member in a direction perpendicular to the first direction, so that the support member is fixed to the accommodating groove.

2. The cover plate assembly according to claim 1, wherein
the accommodating groove has a peripheral wall surrounding the support member and a bottom wall connected to the support member, and the peripheral wall is connected to the bottom wall; and
the plurality of limiting members are provided, and the plurality of limiting members are connected to the peripheral wall.

3. The cover plate assembly according to claim 2, wherein
the plurality of limiting members are arranged around the peripheral wall.

4. The cover plate assembly according to claim 2 or 3, wherein
the plurality of limiting members are arranged at intervals along the first direction.

5. The cover plate assembly according to claim 2, wherein
the limiting member has a first end and a second end opposite to each other in the first direction, the second end faces the bottom wall, and a first chamfer is arranged on one side of the first end facing away from the peripheral wall.

6. The cover plate assembly according to claim 5, wherein
the support member has a third end and a fourth end in the first direction, the fourth end faces the bottom wall, and a second chamfer is circumferentially arranged on an edge of the fourth end.

7. The cover plate assembly according to claim 1, wherein
an orthographic projection of the support member on the cover plate is at least partially located outside the explosion-proof hole.

8. The cover plate assembly according to claim 1, wherein
the insulating member is provided with a vent hole in the first direction, and the vent hole is in communication with the explosion-proof hole.

9. The cover plate assembly according to claim 2, wherein
a fitting clearance between the support member and the peripheral wall is a mm, satisfying: 0.2 mm ≥ a ≥ 0.1 mm.

10. The cover plate assembly according to claim 2 or 9, wherein
a dimension of the limiting member in a direction perpendicular to the peripheral wall is b mm, satisfying: 0.5 mm ≥ b ≥ 0.2 mm.

11. The cover plate assembly according to claim 1, wherein
a dimension of the support member in the first direction is less than or equal to a depth of the accommodating groove in the first direction.

12. A cell, comprising: the cover plate assembly according to any one of claims 1 to 11, and further comprising a housing and an electrode assembly, wherein the housing has an accommodating cavity and an opening in communication with the accommodating cavity, the electrode assembly and the insulating member are arranged in the accommodating cavity, the cover plate covers the opening, and the insulating member is located between the cover plate and the electrode assembly.
